# EUROPÄISCHE PATENTSCHRIFT

(11) **EP 3 593 004 B1**
(45) Veröffentlichungstag und Bekanntmachung des Hinweises auf die Patenterteilung: **15.06.2022**
(21) Anmeldenummer: 18711000.2
(22) Anmeldetag: 22.02.2018
(51) Int. Cl.: F16D 13/64, F16D 13/70

(54) **KUPPLUNGSANORDNUNG MIT INTEGRIERTEM ANSCHLAG UND HYBRIDMODUL MIT KUPPLUNGSANORDNUNG**
CLUTCH ASSEMBLY WITH INTEGRATED STOP, AND HYBRID MODULE WITH CLUTCH ASSEMBLY
ENSEMBLE D'EMBRAYAGE AVEC BUTÉE INTÉGRÉE ET MODULE HYBRIDE AVEC ENSEMBLE D'EMBRAYAGE

(30) Priorität: 06.03.2017 DE 102017104579; 08.12.2017 DE 102017129279
(43) Veröffentlichungstag der Anmeldung: 15.01.2020
(73) Patentinhaber: Schaeffler Technologies AG & Co. KG, 91074 Herzogenaurach (DE)
(72) Erfinder: BEYER, Robin, 77694 Kehl (DE); HOPPE, Marcus, 77855 Achern (DE); PIEPER, Torsten, 76137 Karlsruhe (DE)
(86) Internationale Anmeldenummer: PCT/DE2018/100154
(87) Internationale Veröffentlichungsnummer: WO 2018/161999

(56) Entgegenhaltungen:
- DE-A1-102004 013 265
- DE-A1-102015 202 526

## Beschreibung

Die vorliegende Erfindung betrifft eine Kupplungsanordnung mit einer Lamellenkupplung für einen Antriebsstrang eines Kraftfahrzeugs, mit einem Innenlamellenträger, der zur Aufnahme von Innenlamellen, wie z.B. Stahllamellen, dient, einem Außenlamellenträger, der zur Aufnahme von Außenlamellen, wie z.B. Reiblamellen, dient, wobei durch die Innenlamellen und die Außenlamellen in Radialrichtung überlappen und in Axialrichtung alternierend, d.h., abwechselnd, angeordnet sind, und eine Anpressplatte, die bei deren Aktivierung über einen Drucktopf die Lamellen in Reibkontakt miteinander bringt, wobei ferner ein Betätigungssystem vorhanden ist, welches zur Betätigung der Lamellenkupplung dient. Ferner betrifft die Erfindung auch ein Hybridmodul für einen Antriebsstrang eines Kraftfahrzeugs mit einem ersten Antriebsaggregat, mit bspw. eine Verbrennungskraftmaschine, und einem zweiten Antriebsaggregat, wie bspw. eine E-Maschine, die über eine erfindungsgemäße Kupplungsanordnung drehmomentübertragend verbindbar sind.

Die DE 10 2009 059 944 A1 offenbart ein Hybridmodul für einen Antriebsstrang eines Fahrzeuges. Das darin offenbarte Hybridmodul weist eine erste Trennkupplung, einen Elektromotor und eine zweite Trennkupplung auf, wobei die erste Trennkupplung im Momentenfluss zwischen einem Verbrennungsmotor im Antriebsstrang und dem Elektromotor und die zweite Trennkupplung im Momentenfluss zwischen Elektromotor und einem Getriebe im Antriebsstrang angeordnet sind, wobei die erste Trennkupplung und die zweite Trennkupplung in einem gemeinsamen Nassraum angeordnet sind.

Hybridmodule sind bzgl. ihrer Anordnungsstruktur der Antriebsaggregate, üblicherweise ein Verbrennungsmotor und eine E-Maschine, zu unterscheiden. So ist bspw. unter einer P2-Anordnung eine solche Anordnung zu verstehen, bei der die E-Maschine nicht direkt am Verbrennungsmotor verbaut ist, sondern sich am Getriebeeingang mit einer dazwischenliegenden Kupplung befindet. Dadurch ist der Verbrennungsmotor vom restlichen Antriebsstrang abkoppelbar und die elektrische Fahrt sowie die Rekuperation sind in einem wesentlich effizienteren Rahmen, ohne die Einbußen des Schleppmoments des Verbrennungsmotors, möglich. Solche Hybridmodule werden dann auch üblicherweise als P2-Hybridmodule bezeichnet.

Ferner unterscheidet man bei Hybridmodulen zwischen achsparallelen und koaxialen Hybridmodulen. Bei achsparallelen Hybridmodulen sind die Ausgangswellen der beiden Antriebsaggregate, in der Regel ein Verbrennungsmotor und eine E-Maschine, parallel zueinander ausgerichtet. Bei koaxialen Hybridmodulen sind diese Ausgangswellen koaxial, das heißt, zueinander fluchtend, angeordnet. Das bedeutet, sie haben dieselbe Rotationsachse.

Bei trockenen Einscheibenkupplungen ist es üblich, den Verschleißanschlag für den Drucktopf durch einen separaten Anschlag oder einen Bolzen an der Anpressplatte zu verwirklichen. Dieser Anschlag läuft dann nach Erreichen der Verschleißgrenze der Kupplungsscheibe auf die Druckplatte bzw. ein Schwungrad auf und verhindert dadurch weiteren Verschleiß der Kupplungsscheibe.

Für eine nasse Doppelkupplung ist es aus der DE 10 2015 202 526 A1 bekannt den axialen Verfahrweg eines als Drucktopf agierenden Kolbens einzuschränken und Beschädigungen auf Grund von Überfahrwegen, die für das übertragende Drehmoment nicht notwendig sind, zu vermeiden.

Darüber hinaus ist es derzeit üblich, den Zentralausrücker als selbstständiges Bauteil aufzubauen und nicht direkt in der Kupplung zu integrieren. Dementsprechend muss der Zentralausrücker als selbstständiges Bauteil mit einem Anschlag versehen werden. Dies wird bei Zentralausrückern aus Metall in der Regel mit einer Bördelung und bei Zentralausrückern aus Kunststoff mit einem mechanischen Anschlag verwirklicht. Zur Zentrierung des Drucktopfes werden in der Regel zusätzliche Bauteile, wie z.B. Zentrierbolzen verwendet.

Nachteilig hierbei sind jedoch viele einzelne Bauteile, die sowohl zusätzliche Kosten wie auch zusätzliche Montageschritte verursachen und Bauraum benötigen. Aufgabe der Erfindung ist es, die Nachteile aus dem Stand der Technik zu vermeiden oder wenigstens zu mildern, und einen Innenlamellenträger vorzusehen, der mehrere Funktionen in sich integriert.

Die Aufgabe der Erfindung wird bei einer gattungsgemäßen Kupplungsanordnung erfindungsgemäß dadurch gelöst, dass der Innenlamellenträger derart ausgelegt ist, dass er als Anschlag für ein die Lamellenkupplung betätigendes Element dient. Damit kann im Idealfall auf weitere Bauteile und Montageschritte verzichtet werden, was wiederum Kostenersparnis mit sich bringt. Zudem kann durch die Integration der Funktionen sowohl axialer und auch radialer Bauraum eingespart werden. Dieser Bauraum kann genutzt werden, um die Kupplung bei gleicher Momentenkapazität geometrisch kleiner zu dimensionieren oder bei gleicher geometrischer Dimensionierung die Momentenkapazität zu erhöhen.

Vorteilhafte Ausführungsformen sind in den Unteransprüchen beansprucht und werden nachfolgend erläutert.

Es ist von Vorteil, wenn das betätigende Element als der Drucktopf und/oder als ein Betätigungslager, z.B. Ein- / Ausrücklager, ausgebildet ist. Durch den definierten Anschlag für den Drucktopf durch den Innenlamellenträger wird dem Bersten der Beläge der Lamellen, welches bei zu hohem Verschleiß auftreten kann, entgegengewirkt.

Erfindungsgemäß dient der Innenlamellenträger zur Zentrierung des Drucktopfs.

Hierbei hat es sich als besonders vorteilhaft herausgestellt, wenn die Zentrierung als eine Flankenzentrierung ausgeführt ist.

Für eine solche Flankenzentrierung ist es von Vorteil, wenn der Innenlamellenträger Öffnungen aufweist, in die Füße des Drucktopfes zur Zentrierung einsetzbar sind. Ferner ist es von Vorteil, wenn das Betätigungssystem einen Nehmerzylinder (CSC) aufweist.

Eine mögliche Ausführungsform sieht vor, dass der Innenlamellenträger integral mit einer Riemenscheibe ausgebildet ist, um mit einem Endloszugmittel direkt in Kontakt bringbar zu sein. Das heißt, dass die Riemenscheibe und damit der Innenlamellenträger direkt mit dem Endloszugmittel in Kontakt gebracht werden kann.

Für die Kupplungsanordnung hat es sich als vorteilhaft gezeigt, wenn zwischen dem Drucktopf und einer Anpressplatte eine Modulationsfeder eingesetzt ist.

Ferner ist es von Vorteil, wenn die Lamellenkupplung mittels einer Tellerfeder vorgespannt ist.

Mit anderen Worten besteht die Erfindung darin, dass in den Lamellenträger Funktionen integriert werden. Damit kann im Idealfall auf weitere Bauteile und Montageschritte verzichtet werden, was wiederum Kostenersparnis mit sich bringt. Zudem kann durch die Funktionsintegration sowohl axialer als auch radialer Bauraum eingespart werden. Dieser Bauraum kann genutzt werden, um die Kupplung bei gleicher Momentenkapazität geometrisch kleiner zu dimensionieren oder bei gleicher geometrischer Dimensionierung die Momentenkapazität zu erhöhen.

Der Innenlamellenträger dient als Verschleißanschlag für die Lamellenkupplung. Durch den definierten Anschlag wird dem Bersten der Beläge, welches bei zu hohem Verschleiß auftreten kann, entgegengewirkt. Das übertragbare Moment nimmt ab dem Zeitpunkt der Berührung von Drucktopf und Innenlamellenträger kontinuierlich ab. Dabei rutscht die Kupplung zu Beginn erst bei hohen Momenten durch, danach verschiebt sich das Durchrutschen zu immer niedrigeren Momenten, bis die Kupplung das geforderte Moment nicht mehr übertragen kann.

Eine weitere Ausführungsform sieht vor, dass das Ausrücklager bei maximal geöffneter Kupplung am Innenlamellenträger ansteht, sprich der Innenlamellenträger dient dem Ausrücklager als Anschlag. Da das Ausrücklager mit dem Ausrücksystem verbunden ist, hat dieses damit auch einen definierten Anschlag. Diesen mechanischen Anschlag braucht es, damit bei Fehlverhalten, z.B. hervorgerufen durch ein defektes Wegmesssystem, der Kolben des Ausrücksystems nicht aus dem Zylinder herausgerückt bzw. herausgedrückt wird. Dies würde zwangsläufig zu einer dauerhaften Fehlfunktion des gesamten Ausrücksystems führen. Damit der Kolben auf dem Transportweg vor dem Einbauen in die Kupplung nicht aus dem Zylinder fällt, wird das Ausrücksystem selbst mit einer Transportsicherung versehen.

Zudem kann die Tellerfeder durch den Anschlag mechanisch nicht überdrückt werden. Dies schützt die Tellerfeder vor Überbeanspruchung. Weiterhin wird dadurch eine Berührung der Tellerfeder mit dem Außenlamellenträger verhindert, was zwangsläufig zu einer Schädigung der Tellerfeder oder des Außenlamellenträgers führen würde, da die Bauteile in einer geöffneten Position der Kupplung eine Differenz-Drehzahl aufweisen.

Auf zusätzliche Bauteile zum Zentrieren des Drucktopfes, wie z.B. Bolzen, kann verzichtet werden. Die Zentrierung wird anhand einer Flankenzentrierung verwirklicht. Diese wird direkt in den Innenlamellenträger integriert. Dabei greifen die Füße des Drucktopfes durch die Fenster am Innenlamellenträger und erzeugen damit die erwünschte Zentrierwirkung.

Man kann also auch sagen, dass gemäß der Erfindung ein Drucktopf und ein Innenlamellenträger derart ausgelegt sind, dass sie in einem Zustand einer vorbestimmten Abnutzung von Reibbelägen einer Trennkupplung einander berühren. Daher wirkt der Innenlamellenträger als Verschleißanschlag. Zusätzlich wirkt der Innenlamellenträger als Anschlag für ein Ausrücklager eines Ausrücksystems der Trennkupplung. In einer vollständig geöffneten Position / Zustand der Trennkupplung, schlägt das Ausrücklager gegen den Innenlamellenträger, was einer Überbeanspruchung der Tellerfeder entgegenwirkt. Darüber hinaus dient der Innenlamellenträger als ein Zentrierelement zum Zentrieren des Drucktopfes. Füße des Drucktopfes sind mit Öffnungen an dem Innenlamellenträger in Eingriff, um dadurch die Zentrierung des Drucktopfes zu erhalten.

Die Erfindung wird nachfolgend mit Hilfe von Figuren näher erläutert, in denen unterschiedliche Ausführungsformen dargestellt sind. Es zeigen:
- Fig. 1: eine Längsschnittdarstellung eines Hybridmoduls;
- Fig. 2: den Längsschnitt aus Fig. 1 in perspektivischer Darstellung;
- Fig. 3: dieselbe Ansicht wie Fig. 1, zur Erläuterung von Wirkzusammenhängen;
- Fig. 4: einen Teilbereich des Hybridmoduls im Bereich der Kupplungsanordnung;
- Fig. 5: eine vergrößerte Darstellung der Kupplungsanordnung im Längsschnitt bei geschlossener Kupplung;
- Fig. 6: die Kupplungsanordnung im Längsschnitt bei geöffneter Kupplung;
- Fig. 7: die Kupplungsanordnung im Längsschnitt bei geschlossener Kupplung;
- Fig. 8: die Längsschnittansicht aus Fig. 7 in perspektivischer Darstellung; und
- Fig. 9: einen Teil der Schnittansicht IX-IX aus Fig. 7 und Fig. 8.

Die Figuren sind lediglich schematischer Natur und dienen nur dem Verständnis der Erfindung. Die gleichen Elemente sind mit denselben Bezugszeichen versehen.

Merkmale der einzelnen Ausführungsbeispiele können auch in anderen Ausführungsbeispielen realisiert werden. Sie sind also untereinander austauschbar.

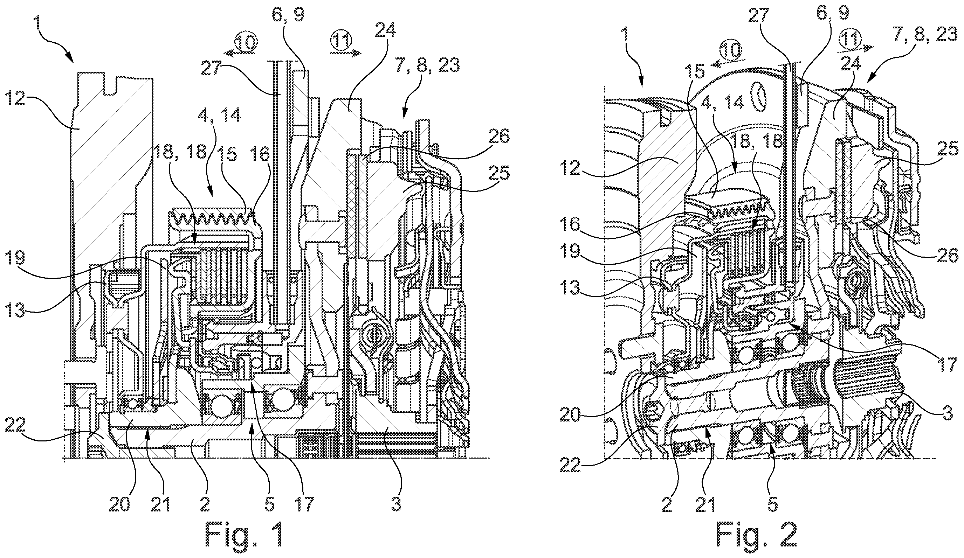

Die Fign. 1 und 2 zeigen einen Längsschnitt eines Hybridmoduls 1 als Schnittansicht (Fig. 1) bzw. in perspektivischer Ansicht (Fig. 2). Das Hybridmodul 1 weist eine Zwischenwelle 2 sowie eine davon separate Antriebswelle 3 auf. Die Antriebswelle 3 dient als Getriebeeingangswelle. Über eine Trennkupplung 4, welche auf der Zwischenwelle 2 montiert ist, ist es möglich, ein erstes Antriebsaggregat (nicht gezeigt) und/oder ein zweites Antriebsaggregat (nicht gezeigt) drehmomentübertragend mit der Zwischenwelle 2 zu verbinden. Die Zwischenwelle 2 ist über eine Stützlagerung 5 an einem Gehäuse 6 des Hybridmoduls 1 abgestützt. Mit der Antriebswelle 3 und der Zwischenwelle 2 ist ein Anfahrelement 7, ebenfalls in Form einer Kupplung 8, verbunden.

Das Gehäuse 6 weist eine Zwischenwand 9 auf, bzgl. welcher das Hybridmodul 1 in eine Motorseite 10 und eine Getriebeseite 11 aufgeteilt werden kann. Auf der Motorseite 10 befinden sich das erste Antriebsaggregat und das zweite Antriebsaggregat, welche hier nicht gezeigt sind. Als erstes Antriebsaggregat dient bspw. eine Verbrennungskraftmaschine, die über ein Zweimassenschwungrad, welches an einer Kurbelwelle (nicht gezeigt) der Verbrennungskraftmaschine angebracht ist, mit einem Außenlamellenträger 13, der als Lamellenkupplung 14 ausgebildeten Trennkupplung 4 verbunden ist.

Das zweite Antriebsaggregat ist bspw. in Form einer E-Maschine, wie einem E-Motor (nicht gezeigt), ausgebildet und über einen Riemen 15 mit einem Innenlamellenträger 16 mit der Trennkupplung 4 drehmomentübertragend verbunden. Die Trennkupplung 4 wird über eine Aus- / Einrückvorrichtung 17 betätigt. Die Lamellenpakete 18 (Reibund Stahllamellen) werden über eine Tellerfeder 19 vorgespannt.

Die Trennkupplung 4 ist als eine gesamte Einheit auf einer Nabe 20 angeordnet, die über eine Welle-Nabe-Verbindung 21 mit der Zwischenwelle 2 drehmomentübertragend verbunden ist. Die Nabe 20 ist über eine Zentral- bzw. Sicherungsschraube 22 gegen Axialverschiebung gesichert.

Auf der Getriebeseite 11 befindet sich das Anfahrelement 7, in der gezeigten Ausführungsform, welches als eine Einfachkupplung 23 ausgebildet ist. Die Einfachkupplung 23 ist über ein Schwungrad 24, welches hier zweiteilig ausgeführt ist, mit der Zwischenwelle 2 verbunden. Über eine Kupplungsscheibe 25 und einem Reibelement 26 ist die Einfachkupplung 23 mit der Antriebswelle 3 drehmomentübertragend verbunden.

Die Trennkupplung 4 kann auch als KO-Kupplung und die Kupplung 8 kann auch als K1-Kupplung bezeichnet werden. Zur Betätigung der Aus- / Einrückvorrichtung 17 der Trennkupplung 4 weist das Gehäuse 6 eine Leitung 27 auf, über die bspw. ein Hydraulikmittel zugeführt werden kann.

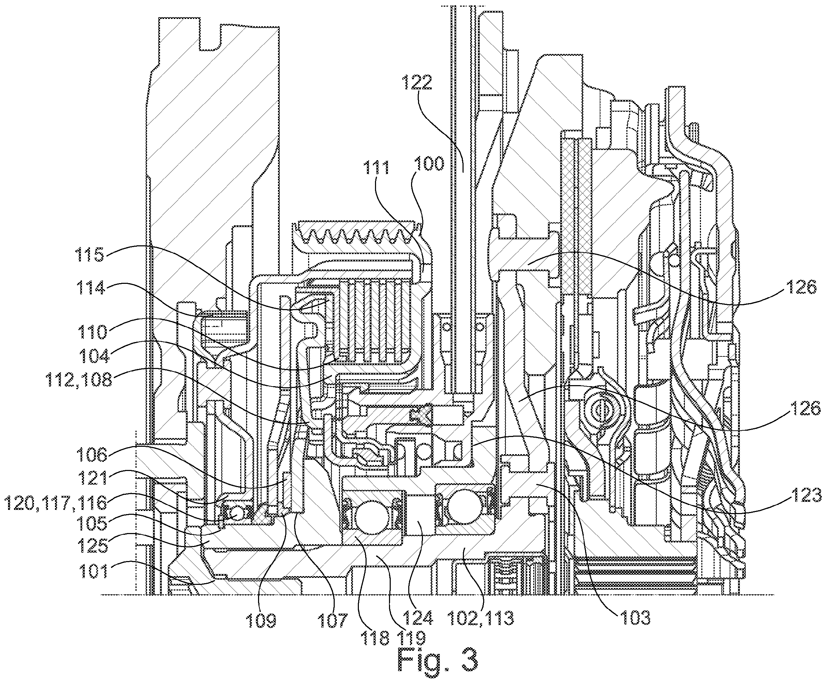

Fig. 3 zeigt die identische Ansicht zur Fig. 1, wobei hier ein Augenmerk auf Wirkungszusammenhänge gelegt ist. Hierbei bezeichnet das Bezugszeichen 100, dass eine Riemenscheibe und ein Lamellenträger einteilig oder mehrteilig ausgeführt sind.

Das Bezugszeichen 101 bezeichnet, dass eine axiale Sicherung und Kraftabstützung einer Trennkupplung über eine Verschraubung zu einer Zwischenwelle ausgeführt ist.

Das Bezugszeichen 102 bezeichnet eine Zwischenwelle als Abstützung (radial und axial) für einen Kupplungsdeckel, eine Doppelkupplung, einen Wandler etc.

Das Bezugszeichen 103 bezeichnet eine Verschraubung, Vernietung oder Verschweißung etc. eines Schwungrads und z. B. eines Kupplungsdeckels, einer Doppelkupplung oder eines Wandlers etc. an der Zwischenwelle.

Das Bezugszeichen 104 bezeichnet einen Innenlamellenträger, der als ein Verschleißanschlag für einen Drucktopf dient.

Das Bezugszeichen 105 bezeichnet, dass ein Abziehen der Trennkupplung von der Zwischenwelle über eine Nutzung einer Nut für einen Sicherungsring (oder einer separaten Nut) und eines Gewindes der Zwischenwelle möglich ist.

Das Bezugszeichen 106 bezeichnet, dass eine Vernietung des Lamellenträgers mit einer Nabe gleichzeitig zur Zentrierung einer Tellerfeder genutzt wird.

Das Bezugszeichen 107 bezeichnet, dass der Lamellenträger über einen separaten Zentrierdurchmesser mit der Nabe verbunden ist.

Das Bezugszeichen 108 bezeichnet, dass ein Innenlamellenträger auch als ein Anschlag für ein Einrücksystem dient.

Das Bezugszeichen 109 bezeichnet, dass ein Toleranzausgleich einer Tellerfederkraft durch Shimmen mit unterschiedlichen Höhen eines Abstützringes erfolgt.

Das Bezugszeichen 110 bezeichnet, dass eine axiale Bauraumersparnis durch abgeknickte Füße (Verzahnung) einer Anpressplatte erzielt wird.

Das Bezugszeichen 111 bezeichnet, dass der Innenlamellenträger zusätzliche Löcher für Stifte aufweist, um Reiblamellen bei der Montage zu positionieren.

Das Bezugszeichen 112 bezeichnet, dass der Innenlamellenträger als Zentrierung für den Drucktopf dient.

Das Bezugszeichen 113 bezeichnet, dass im Falle einer Doppelkupplung als eine Anfahrkupplung ein Stützlager der Trennkupplung auch die Lagerung der Doppelkupplung übernimmt. Es gibt eine feste Verbindung der Doppelkupplung mit einer Innenwelle der Trennkupplung. Es ist kein Doppelkupplungslager (auf einer Getriebewelle) vorgesehen.

Das Bezugszeichen 114 bezeichnet, dass keine Verspanneinrichtung von einem Zweimassenschwungrad und einer Trennkupplung vorgesehen ist. Verzahnungsgeräusche treten nur bei Leerlauf auf. Ein Leerlauf der Brennkraftmaschine ist keine vorgesehene Betriebsart. Mit der E-Maschine kann stets ein Moment auf einer Verzahnung liegen.

Das Bezugszeichen 115 bezeichnet, dass eine Anpressplatte als eine Zentrierung für eine Modulationsfeder dient.

Das Bezugszeichen 116 bezeichnet, dass eine Nabe als ein Träger für ein Lager für einen Außenlamellenträger dient.

Das Bezugszeichen 117 bezeichnet, dass ein Innenring des Lagers des Außenlamellenträgers in die Nabe integriert ist.

Das Bezugszeichen 118 bezeichnet, dass ein Innenring des Lagers, z.B. eines Rillenkugellagers, der Zwischenwelle in die Nabe integriert ist.

Das Bezugszeichen 119 bezeichnet, dass die Nabe als ein Träger für ein Stützlager dient.

Das Bezugszeichen 120 bezeichnet, dass das Lager für den Außenlamellenträger separat auf einer Zwischenwelle und nicht auf der Nabe gelagert ist.

Das Bezugszeichen 121 bezeichnet, dass der Außenlamellenträger als ein Außenring für Lager, z.B. ein Blechlager, dient.

Das Bezugszeichen 122 bezeichnet, dass eine Leitung für einen Zentralausrücker bzw. CSC bzw. Concentric Slave Cylinder in einer Blech- oder Materialdicke einer Zwischenwand verschwindet.

Das Bezugszeichen 123 bezeichnet, dass der Zentralausrücker mit einem Flansch und einer Lagerträgereinheit an die Zwischenwand geschraubt, genietet oder verschweißt ist. Der Zentralausrücker ist nur aufgesteckt und nicht verschraubt.

Das Bezugszeichen 124 bezeichnet, dass ein Bauraum zwischen Lagern der Zwischenwelle und der Zwischenwand zum Messen von Drehmoment, Temperatur, Drehzahl, Position (Resolver) usw., bzw. für Einrichtungen zum Messen von Werten dieser Größen verwendet wird.

Das Bezugszeichen 125 bezeichnet, dass eine Demontage der Trennkupplung ohne eine Demontage des Hybridmoduls möglich ist. Alternativ können die Trennkupplung und die Anfahrkupplung eine Liefereinheit inklusive der Zwischenwand und des Rotors der E-Maschine sein. Ebenso kann ein Komplettmodul mit Gehäuse, Stator, Kühlung, Elektronik, Aktorik, usw. vorgesehen sein.

Das Bezugszeichen 126 bezeichnet, dass ein Schwungrad für die Anfahrkupplung zweiteilig ausgeführt ist, um einen axialen Bauraum zu sparen. Eine Vernietung von Guss mit Blech ist außerhalb, innerhalb oder unterhalb einer Reibfläche möglich.

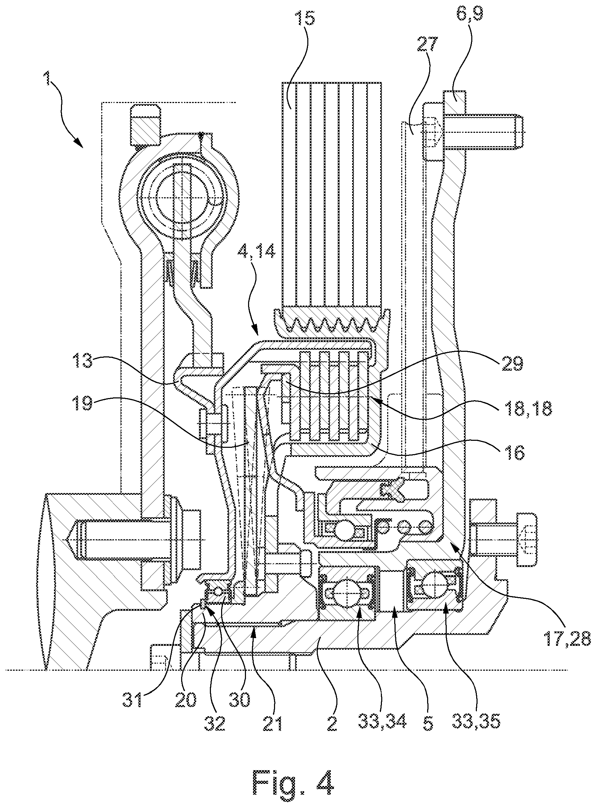

Fig. 4 zeigt einen Ausschnitt des Hybridmoduls 1 im Bereich der Zwischenwelle 2 als Längsschnittansicht. Die Trennkupplung 4, welche auch als KO-Kupplung bezeichnet werden kann, ist in der hier gezeigten Ausführungsform eine "normally-closed"-Kupplung mit einem CSC (Concentric Slave Cylinder) bzw. einem Nehmerzylinder 28 als eine Aus- / Einrückvorrichtung 17. Die Trennkupplung 4, die als Lamellenkupplung 14 ausgebildet ist, kann als eine Trockenkupplung oder eine Nasskupplung ausgeführt sein. Der Innenlamellenträger 16 dient, wie vorstehend bereits erwähnt, als Riemenscheibenträger für den Riemen 15. Alternativ, insbesondere für ein koaxiales Hybridsystem (nicht gezeigt) kann der Innenlamellenträger 16 auch als Rotorträger der E-Maschine dienen. Darüber hinaus kann eine Modulationsfeder 29 vorgesehen sein. Der Außenlamellenträger 13 ist über ein Lager 30 auf der Nabe 20 gelagert. Das Lager 30 ist über einen Sicherungsring 31, der in einer entsprechenden Nut 32 in der Nabe 20 eingesetzt ist, gegen Axialverschiebung gesichert. Die Zwischenwelle 2 wird über die Stützlagerung 5 an dem Gehäuse 6, genauer an der Zwischenwand 9 abgestützt. Die Stützlagerung 5 weist in der hier gezeigten Ausführungsform zwei Lager 33 auf, wovon eins als Rillenkugellager 34 und das zweite als ein Schrägkugellager 35 ausgebildet ist.

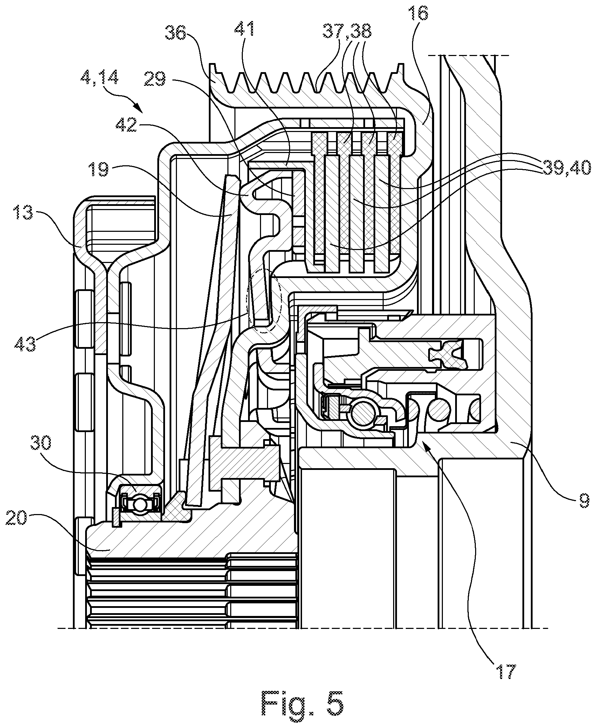

Fig. 5 zeigt eine Längsschnittansicht der Kupplung 4, welche als Lamellenkupplung 14 ausgebildet ist, im Längsschnitt. Die Lamellenkupplung 14 ist hierbei im geschlossenen Zustand dargestellt und der Innenlamellenträger 16 ist integral mit einer Riemenscheibe 36 ausgebildet (vgl. auch Fig. 1). Im geschlossenen Zustand der Lamellenkupplung 14 werden Außenlamellen 37, die als Reiblamellen 38 ausgebildet sind, und Innenlamellen 39, die als Stahllamellen 40 ausgebildet sind, über eine Anpressplatte 41 und einen Drucktopf 42 in Reibkontakt gebracht. Es ist auch möglich, die Außenlamellen 37 als Stahllamellen und die Innenlamellen 39 als Reiblamellen auszubilden. Die hier gezeigte Position des Drucktopfes 42 entspricht dabei dem maximal erwarteten Verschleiß der Reibbeläge auf den Reiblamellen 38. Würden diese Reibbeläge durch weitere Beanspruchung der Kupplung 14 weiter verschleißen, würde der Drucktopf 42 an der mit dem Bezugszeichen 43 markierten Stelle auf den Innenlamellenträger 16 auflaufen. Demnach dient der Innenlamellenträger 16 als Verschleißanschlag für den Drucktopf 42.

Durch den definierten Anschlag wird einem Bersten der Beläge bei zu hohem Verschleiß entgegengewirkt. Das übertragbare Moment nimmt ab dem Zeitpunkt der Berührung von dem Drucktopf 42 und dem Innenlamellenträger 16 kontinuierlich ab, bis die Kupplung 14 das Moment nicht mehr übertragen kann und durchrutscht.

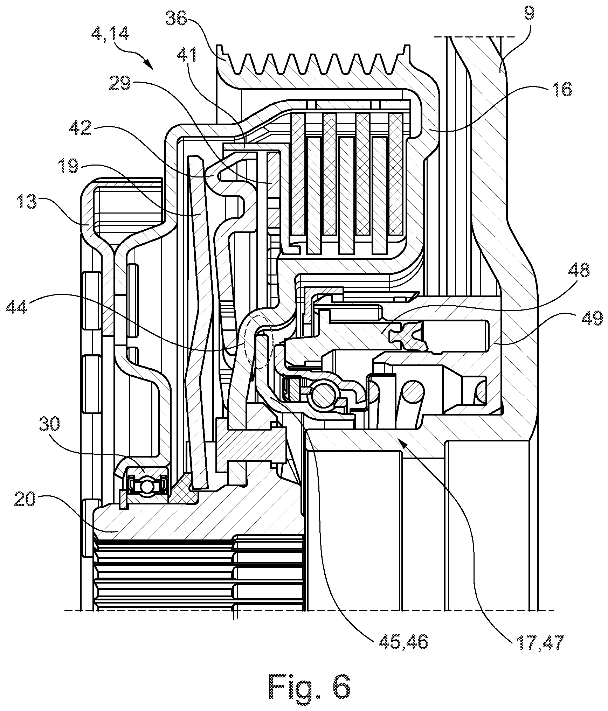

Fig. 6 zeigt die Trennkupplung 4 als Lamellenkupplung 14 im maximal geöffneten Zustand. In dem hier gezeigten Zustand dient der Innenlamellenträger 16 in dem mit dem Bezugszeichen 44 markierten Bereich als Anschlag für ein Betätigungslager 45, welches hier als ein Ausrücklager 46 ausgeführt ist, eines als die Ausrückvorrichtung 17 ausgebildeten Betätigungssystem 47. Da der Innenlamellenträger 16 hier als Anschlag für das Ausrücklager 46 dient, dient der Innenlamellenträger 16 somit auch für die gesamte Ausrückvorrichtung 17 als Anschlag. Damit wird verhindert, dass ein Kolben 48 der Ausrückvorrichtung 17 bei einer möglichen Fehlinterpretation des Wegmesssystems (nicht gezeigt) aus einem Zylinder 49 herausgedrückt wird und die Ausrückvorrichtung 17 dadurch ihre Funktion verliert. Der Zylinder 49 ist hierbei beispielhaft als der Nehmerzylinder 28 ausgeführt.

Diese Anordnung bietet zudem den Vorteil, dass die Tellerfeder 19 durch den Anschlag mechanisch nicht überdrückt werden kann. Somit wird die Tellerfeder 19 vor Überbeanspruchung geschützt und eine Berührung der Tellerfeder 19 mit dem Außenlamellenträger 13 verhindert.

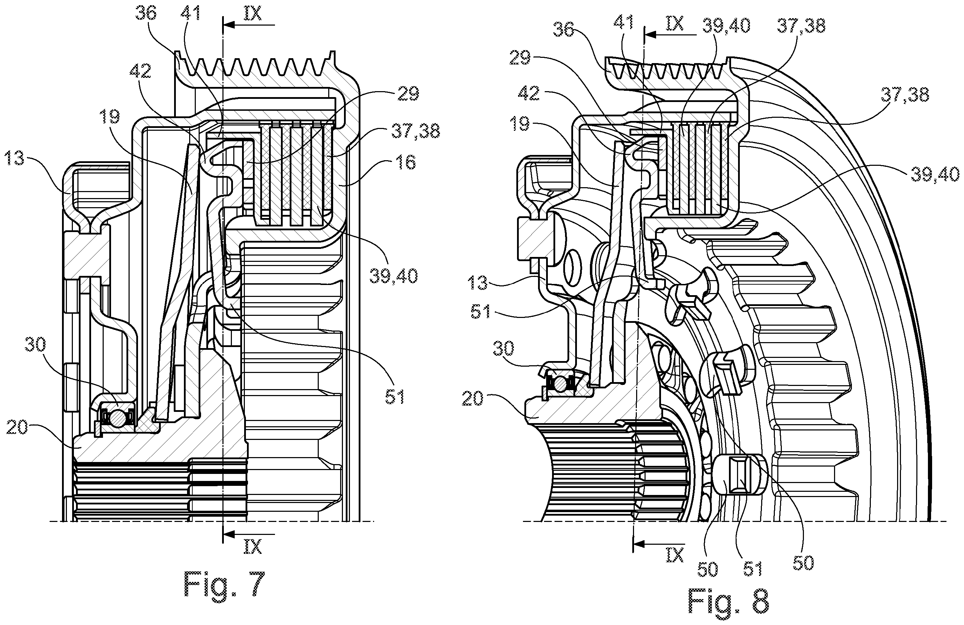

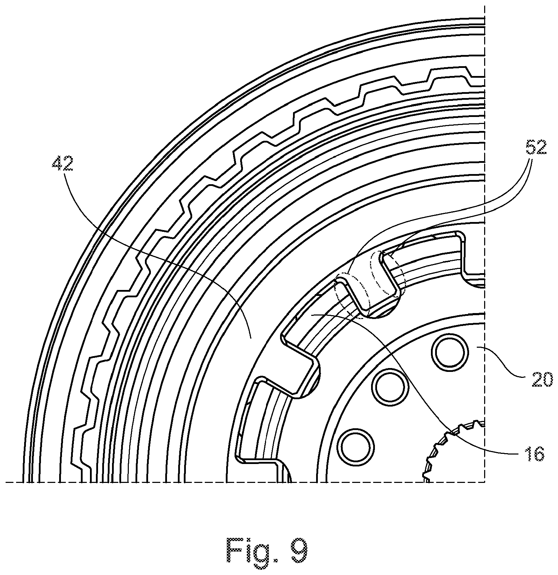

Die Fign. 7 bis 9 zeigen eine weitere Ausführungsform, in der der Innenlamellenträger 16 zusätzlich als Zentrierung für den Drucktopf 42 dient. Dabei zeigen die Fign. 7 und 8 jeweils einen Längsschnitt der Trennkupplung 4 im geschlossenen Zustand und Fig. 9 die Schnittansicht des Schnittes IX-IX aus Fig. 7 bzw. Fig. 8.

Insbesondere in Fig. 8 und Fig. 9 ist zu erkennen, dass der Innenlamellenträger 16 über den Umfang verteilte Öffnungen 50 aufweist und der Drucktopf 42 an seinem Innendurchmesser Füße 51 aufweist, die in die Öffnungen 50 des Innenlamellenträgers 16 eingreifen. Die Füße 51 des Drucktopfes 42 erstrecken sich an seinem Innendurchmesser in Axialrichtung. Durch diesen Eingriff wird der Drucktopf 42 radial am Innenlamellenträger 16 zentriert, wie in dem Bereich mit dem Bezugszeichen 52 zu erkennen ist (siehe Fig. 9).

### Bezuqszeichenliste

- 1: Hybridmodul
- 2: Zwischenwelle
- 3: Antriebswelle
- 4: Trennkupplung
- 5: Stützlagerung
- 6: Gehäuse
- 7: Anfahrelement
- 8: Kupplung
- 9: Zwischenwand
- 10: Motorseite
- 11: Getriebeseite
- 12: Zweimassenschwungrad
- 13: Außenlamellenträger
- 14: Lamellenkupplung
- 15: Riemen
- 16: Innenlamellenträger
- 17: Aus- / Einrückvorrichtung
- 18: Lamellenpaket
- 19: Tellerfeder
- 20: Nabe
- 21: Welle-Nabe-Verbindung
- 22: Zentral- / Sicherungsschraube
- 23: Einfachkupplung
- 24: Schwungrad
- 25: Kupplungsscheibe
- 26: Reibelement
- 27: Leitung
- 28: Nehmerzylinder (CSC)
- 29: Modulationsfeder
- 30: Lager
- 31: Sicherungsring
- 32: Nut
- 33: Lager
- 34: Rillenkugellager
- 35: Schrägkugellager
- 36: Riemenscheibe
- 37: Außenlamelle
- 38: Reiblamelle
- 39: Innenlamelle
- 40: Stahllamelle
- 41: Anpressplatte
- 42: Drucktopf
- 43: Positionsmarkierung
- 44: Positionsmarkierung
- 45: Betätigungslager
- 46: Ausrücklager
- 47: Betätigungssystem
- 48: Kolben
- 49: Zylinder
- 50: Öffnung
- 51: Füße
- 52: Positionsmarkierung
- 101: Verschraubung
- 102: Zwischenwelle
- 103: VerschraubungNernietungNerschweißung
- 104: Innenlamellenträger
- 105: Nut
- 106: Vernietung
- 107: Zentrierdurchmesser
- 108: Anschlag
- 109: Abstützring
- 110: Verzahnung
- 111: Loch
- 112: Drucktopfzentrierung
- 113: Stützlager
- 114: Verzahnung
- 115: Anpressplatte
- 116: Nabe
- 117: Innenring
- 118: Innenring
- 119: Nabe
- 120: Lager
- 121: Außenring
- 122: Zwischenwand
- 123: Zentralausrücker
- 124: Bauraum

## Patentansprüche

1. Kupplungsanordnung (4) mit einer Lamellenkupplung (14) für einen Antriebsstrang eines Kraftfahrzeugs mit einem Innenlamellenträger (16), der zur Aufnahme von Innenlamellen (39) dient, einem Außenlamellenträger (13), der zur Aufnahme von Außenlamellen (37) dient, wobei sich die Innenlamellen (39) und die Außenlamellen (37) in Radialrichtung überlappen und in Axialrichtung alternierend angeordnet sind, und einer Anpressplatte (41), die bei deren Aktivierung über einen Drucktopf (42) die Lamellen (37, 39) in Reibkontakt miteinander bringt, wobei ferner ein Betätigungssystem (47) vorhanden ist, welches zur Betätigung der Lamellenkupplung (14) dient, wobei der Innenlamellenträger (16) derart ausgelegt ist, dass er als Anschlag für ein die Lamellenkupplung (14) betätigendes Element (42; 45) dient, **dadurch gekennzeichnet, dass** der Innenlamellenträger (16) zur radialen Zentrierung des Drucktopfes (42) dient..

2. Kupplungsanordnung (4) gemäß Anspruch 1, **dadurch gekennzeichnet, dass** das betätigende Element als Drucktopf (42) und/oder als ein Betätigungslager (45) ausgebildet ist.

3. Kupplungsanordnung (4) gemäß Anspruch 1, **dadurch gekennzeichnet, dass** die Zentrierung als eine Flankenzentrierung ausgeführt ist.

4. Kupplungsanordnung (4) gemäß Anspruch 1 oder 3, **dadurch gekennzeichnet, dass** der Innenlamellenträger (16) Öffnungen (50) aufweist, in die Füße (51) des Drucktopfes (42) zur Zentrierung einsetzbar sind.

5. Kupplungsanordnung (4) gemäß einem der Ansprüche 1 bis 4, **dadurch gekennzeichnet, dass** das Betätigungssystem (47) einen Nehmerzylinder (28) aufweist.

6. Kupplungsanordnung (4) gemäß einem der Ansprüche 1 bis5, **dadurch gekennzeichnet, dass** der Innenlamellenträger (16) integral mit einer Riemenscheibe (36) ausgebildet ist, um mit einem Endloszugmittel (15) in Kontakt bringbar zu sein.

7. Kupplungsanordnung (4) gemäß einem der Ansprüche 2 bis 6, **dadurch gekennzeichnet, dass** zwischen dem Drucktopf (42) und einer Anpressplatte (41) eine Modulationsfeder (29) eingesetzt ist.

8. Kupplungsanordnung (4) gemäß einem der Ansprüche 1 bis 7, **dadurch gekennzeichnet, dass** die Lamellenkupplung (14) mittels einer Tellerfeder (19) vorgespannt ist.

9. Hybridmodul (1) für einen Antriebsstrang eines Kraftfahrzeugs mit einem ersten Antriebsaggregat und einem zweiten Antriebsaggregat, **gekennzeichnet durch** eine Kupplungsanordnung (4) nach einem der vorhergehenden Ansprüche über die die Antriebsaggregate mit einer Antriebswelle (3) drehmomentübertragend verbindbar sind.

## Claims

1. A clutch assembly (4) having a multi-disc clutch (14) for a drive train of a motor vehicle, having an inner disc holder (16) used to hold inner discs (39), an outer disc holder (13) used to hold outer discs (37), wherein the inner discs (39) and the outer discs (37) overlap in the radial direction and alternate in the axial direction, and a pressure plate (41) which, when activated via a pressure piece (42), brings the discs (37, 39) into frictional contact with one another, wherein an actuation system (47) is also provided, which is used to actuate the multi-disc clutch (14), wherein the inner disc holder (16) is designed to act as a stop for an element (42; 45) actuating the multi-disc clutch (14), **characterised in that** the inner disc holder (16) provides radial centring of the pressure piece (42).

2. The clutch assembly (4) according to claim 1, **characterised in that** that actuating element is designed as a pressure piece (42) and/or as an actuating bearing (45).

3. The clutch assembly (4) according to claim 1, **characterised in that** the centring is implemented as a flank centring.

4. The clutch assembly (4) according to claim 1 or 3, **characterised in that** the inner disc holder (16) has openings (50) in which the feet (51) of the pressure piece (42) can be inserted for centring.

5. The clutch assembly (4) according to one of claims 1 to 4, **characterised in that** the actuating system (47) has a slave cylinder (28).

6. The clutch assembly (4) according to one of claims 1 to 5, **characterised in that** the inner disc holder (16) is formed in one piece with a belt pulley (36) such that it can be brought into contact with a continuous traction means (15).

7. The clutch assembly (4) according to one of claims 2 to 6, **characterised in that** a modulation spring (29) is inserted between the pressure piece (42) and a pressure plate (41).

8. The clutch assembly (4) according to one of claims 1 to 7, **characterised in that** the multi-disc clutch (14) is preloaded by means of a disc spring (19).

9. A hybrid module (1) for a drive train of a motor vehicle having a first drive assembly and a second drive assembly, **characterised by** a clutch assembly (4) according to one of the preceding claims, which can be connected to a drive shaft (3) in a torque-transmitting manner via the drive assemblies.

## Revendications

1. Ensemble d'embrayage (4) avec un embrayage multidisque (14) pour une chaîne cinématique d'un véhicule automobile comportant un porte-disques intérieurs (16) qui sert à recevoir des disques intérieurs (39), un porte-disques extérieur (13) qui sert à recevoir des disques extérieurs (37), les disques intérieurs (39) et les disques extérieurs (37) se chevauchant dans la direction radiale et étant agencés de façon alternée dans la direction axiale et un plateau de pression (41) qui, une fois actionné, amène les disques (37, 39) en contact de friction mutuel par l'intermédiaire d'un pot de pression (42), un système d'actionnement (47) étant en outre présent et servant à actionner l'embrayage multidisque (14), le porte-disques intérieurs (16) étant conçu de façon à servir de butée à un élément d'actionnement (42 ; 45) de l'embrayage multidisque (14) **caractérisé en ce que** le porte-disques intérieurs (16) sert au centrage radial du pot de pression (42).

2. Ensemble d'embrayage (4) selon la revendication 1, **caractérisé en ce que** l'élément d'actionnement est réalisé sous la forme d'un pot de pression (42) et/ou d'un palier d'actionnement (45).

3. Ensemble d'embrayage (4) selon la revendication 1, **caractérisé en ce que** le centrage est réalisé sous la forme d'un centrage sur flancs.

4. Ensemble d'embrayage (4) selon la revendication 1 ou 3, **caractérisé en ce que** le porte-disques intérieurs (16) présente des ouvertures (50) dans lesquelles peuvent être insérés les pieds (51) du pot de pression (42) pour le centrage.

5. Ensemble d'embrayage (4) selon l'une quelconque des revendications 1 à 4, **caractérisé en ce que** le système d'actionnement (47) présente un cylindre récepteur (28).

6. Ensemble d'embrayage (4) selon l'une quelconque des revendications 1 à 5, **caractérisé en ce que** le porte-disques intérieurs (16) est réalisé d'un seul tenant avec une poulie (36) pour pouvoir venir en contact avec un moyen de traction sans fin (15).

7. Ensemble d'embrayage (4) selon l'une quelconque des revendications 2 à 6, **caractérisé en ce qu'**un ressort de modulation (29) est inséré entre le pot de pression (42) et un plateau de pression (41).

8. Ensemble d'embrayage (4) selon l'une quelconque des revendications 1 à 7, **caractérisé en ce que** l'embrayage multidisque (14) est précontraint au moyen d'une rondelleressort (19).

9. Module hybride (1) pour une chaîne cinématique d'un véhicule automobile comportant une première unité d'entraînement et une seconde unité d'entraînement, **caractérisé par** un ensemble d'embrayage (4) selon l'une quelconque des revendications précédentes, au moyen duquel les unités d'entraînement peuvent être reliées de manière à transmettre un couple à un arbre d'entrée (3).
